# EUROPEAN PATENT SPECIFICATION

(11) **EP 2 287 222 B1**
(45) Date of publication and mention of the grant of the patent: **05.07.2017**
(21) Application number: 10173245.1
(22) Date of filing: 18.08.2010
(51) Int. Cl.: C08G 18/10, B29C 45/00, G02C 7/10, B32B 7/04, B32B 27/00

(54) **A process for manufacturing a lens**
Verfahren zur Herstellung einer Linse
Procédé de fabrication d'une lentille

(30) Priority: 18.08.2009 JP 2009189269
(43) Date of publication of application: 23.02.2011
(73) Proprietor: Yamamoto Kogaku Co., Ltd., Osaka 577-0056 (JP)
(72) Inventor: Ishibashi, Fumio, Osaka 577-0056 (JP); Kobayashi, Hirokazu, Osaka 577-0056 (JP); Oka, Kouichiro, Osaka 577-0056 (JP)
(74) Representative: Vossius & Partner Patentanwälte Rechtsanwälte mbB

(56) References cited:
- EP-A1- 1 273 935
- EP-A1- 1 394 595
- EP-A1- 2 416 203
- EP-A2- 1 162 482
- EP-A2- 1 464 479
- EP-A2- 1 825 999
- US-A- 3 850 502
- US-A- 5 047 447
- US-A1- 2008 187 749

## Description

The present invention as defined by claim 1 provides a process for manufacturing an optical article which is a lens that has high surface hardness and absorbs any one of visible light, ultraviolet radiation, and infrared radiation, in particular, a functional optical article represented by a prescription lens, sunglasses, or a goggle lens.

There are various kinds of optical articles represented by a prescription lens, sunglasses, a goggle lens, a shield and an optical filter, which absorb electromagnetic waves such as visible light, ultraviolet radiation, infrared radiation, X-rays, β-rays and γ-rays and processes for their production.

Firstly, there is a method of producing an optical article by injection-molding a thermoplastic resin in which an electromagnetic wave absorbing agent is dispersed or dissolved (referred to as "Method A").

As another method, there is a method for producing an optical article by cast-forming a monomer in which an electromagnetic wave absorbing agent is dispersed or dissolved (referred to as "Method B").

As another method, there is a method for producing an optical article by absorbing an electromagnetic wave absorbing agent from the surface of the optical article and fixing the electromagnetic wave absorbing agent (referred to as "Method C").

As another method, there is a method for forming an electromagnetic wave absorbing layer on the surface of an optical article by applying an applying solution in which an electromagnetic wave absorbing agent was dispensed or dissolved to the optical article (referred to as "Method D").

As another method, there is a method for producing an optical article by providing on one side of a plastic sheet a resin layer in which a functional dye, for example, a photochromic dye, is dispersed or dissolved, and then injection-molding a backup resin on the other side of the plastic sheet to laminate the backup resin, as described in Patent Document 1 (referred to as "Method E").

As another method, there is a method for producing an optical article by providing a resin layer in which a functional dye, for example, a photochromic dye, is dispersed or dissolved, between two sheets of plastic sheets, and then injection-molding a backup resin to laminate it on one side of a plastic sheet, as described in Patent Documents 2 and 3 (referred to as "Method F").

[Patent Document 1] US Patent No. 5,827,614
[Patent Document 2] US Patent No. 6, 328, 446
[Patent Document 3] US Patent No. 7, 048, 997

Although Method A which adopts an injection-molding method has a higher production rate and a lower cost compared with a cast molding method (Method B), there is a problem that the molding temperature exceeds 300°C, and thereby the kind of electromagnetic wave absorbing agent is restricted to one which withstands this temperature.

Generally, although Method B as a cast molding method does not use as high temperatures as an injection-molding method (Method A), Method B has a low production rate and a high cost compared with the injection-molding method.

Method C is a so-called staining method, and includes a method for staining an optical article with a water-based staining solution, and a sublimation staining method. This method has a problem that it is restricted to an electromagnetic wave absorbing agent which can be dispersed or dissolved in water, or to an electromagnetic wave absorbing agent which can be sublimated.

Method D, which adopts an applying method, cannot yield very high hardness of an electromagnetic wave absorption layer formed by application, and there is a problem that an optical article represented by a prescription lens, sunglasses, a goggle lens, a shield, and an optical filter is easily damaged.

Method E as described in Patent document 1 is related to a technology of an optical article produced by providing to one side of a plastic sheet a functional resin layer in which a functional dye, for example, a photochromic dye is dispersed or dissolved, and by injection-molding a backup resin on the other side. Since in Method E a functional resin layer corresponds to the surface of an optical article, surface hardness may not be very high, similar to in Method D, and there is a problem that an optical article represented by a prescription lens, a sunglass lens, a goggle lens, a shield and an optical filter, is easily damaged.

Method F described in Patent Document 2 and Patent Document 3 is related to a technology of an optical article produced by forming a functional laminated substance having a structure in which a functional resin layer dispersing or dissolving a functional dye, e.g., a photochromic dye, is held between two plastic sheets, and by injection-molding a backup resin on one side of the plastic sheets of the functional resin layer.

Since in Method F the plastic sheet corresponds to the surface of the optical article, there is not a problem that the surface hardness of the optical article is easily reduced as described in Methods D and E. However, producing a functional laminated substance is associated with high costs. Upon injection-molding, there is a problem in conformity whether the plastic sheet and the backup resin can be heat-adhered, and thereby there is a problem that the plastic sheet and the backup resin have to be appropriately selected.

EP 1 273 935 A1 relates to a transparent synthetic resin laminate with photochromism property consisting essentially of two transparent synthetic resin layers and a photochromic layer formed by curing a mixture of a two liquid polyurethane of a polyurethane prepolymer and a curing agent and a photochromic organic compound which is interposed between said two transparent synthetic resin_ layers. EP 1 825 999 A2 discloses a laminated body comprising a melanin-including layer formed by curing_a_ composition that comprises at least a melanin, a polymerizable monomer, and a urethane-derived composition. EP-1 162 482 A2 relates to a synthetic resin laminate consisting essentially of two transparent synthetic resin layers, a resin layer having photochromism characteristic_ and a resin layer having polarization characteristic interposed between said two transparent synthetic resin layers and an adhesive layer to adhere said resin layer having polarization characteristic to said one transparent synthetic resin layer. EP 1 334 595 A1 discloses a plastic molded article containing a layer_with a photochromic property and/or a layer with a polarization property laminated on at least one side of a base material, wherein the base material is a polycarbonate with a defined photoelastic constant. US 5,047, 447 is directed to a medium incorporating melanin for radiation protection. EP 1 464 479 A2 discloses a method of making a lens comprising a functional laminate bonded to a primary part, wherein a functional member in the laminate structure may provide a polarizing property or a photochromic property.

A technical means of the present invention for solving the above-mentioned technical problems is process for manufactaring a lens as defined in the annexed claims, which lens comprises a laminated substance in which a plastic sheet, a resin layer and a backup resin are laminated in this order, wherein the resin layer contains an electromagnetic wave absorbing agent. which is any one of a visible light absorbing agent, an ultraviolet absorbing agent and an infrared absorbing agent or a mixture thereof.

Another aspect of the present invention is such a process wherein the above-mentioned electromagnetic wave absorbing agent is a photochromic dye.

The above-mentioned electromagnetic wave absorbing agent is dissolved or dispersed at an optical level in the above-mentioned resin layer.

Another aspect of the present invention is such a process wherein the above-mentioned resin layer is any of a polyurethane resin, an acrylic resin, a polyester resin, a polyamide resin and an epoxy resin, or a mixture thereof.

Another aspect of the present invention is such a process wherein the above-mentioned resin layer is a resin layer of a cross-linked polymer.

Another aspect of the present invention is such a process wherein the above-mentioned resin layer is a substance cured by heat-curing a polyurethane composition.

Another aspect of the present invention is such a process wherein the above-mentioned resin layer is a substance cured by heat-curing, by electromagnetically curing or by curing with a combination thereof, an acrylic composition.

Another aspect of the present invention is such a process wherein the above-mentioned resin layer is a substance cured by heat-curing an unsaturated polyester.

Another aspect of the present invention is such a process wherein the above-mentioned resin layer is a substance cured by heat-curing, by ultraviolet-curing or by curing with a combination thereof, an epoxy composition.

Another aspect of the present invention is such a processe wherein the above-mentioned resin layer is a mixture of a straight-chain polymer and a cross-linked polymer.

Another aspect of the present invention is such a process wherein the above-mentioned resin layer is a mixture of a straight-chain polyurethane resin and a cross-linked acrylic resin.

Another aspect of the present invention is such a process wherein the above-mentioned resin layer is a mixture of a straight-chain acrylic resin and a cross-linked polyurethane resin.

Another aspect of the present invention is such a process wherein the above-mentioned plastic sheet is a laminate sheet.

Another aspect of the present invention is such a process wherein any of the layers in the laminate sheet contains an electromagnetic wave absorbing agent.

Another aspect of the present invention is such a process wherein the electromagnetic wave absorbing agent in the laminate sheet is any of a visible light absorbing agent, an ultraviolet absorbing agent and an infrared absorbing agent, or a mixture thereof.

Another aspect of the present invention is such a process wherein the above-mentioned electromagnetic wave absorbing agent in the laminated sheet is a photochromic dye.

Another aspect of the present invention is such a process wherein the above-mentioned electromagnetic wave absorbing agent is dissolved or dispersed at an optical level in any of layers in the above-mentioned laminate sheet.

Another aspect of the present invention is such a process wherein the above-mentioned laminate sheet is a polarizing plate. Another aspect of the present invention is such a process wherein the lens is a prescription lens, sunglasses, or a goggle lens.

The present invention provides a process as defined in the annexed claims for the manufacture of an optical article which is a lens that has high surface hardness, and absorbs any one of visible light, ultraviolet radiation, and infrared radiation, in particular, a functional optical article represented by a prescription lens, sunglasses and a goggle lens.

The plastic sheet used in the present invention can be a monolayer sheet, or a laminate sheet in which multiple sheets are laminated. The case of a monolayer sheet is described below.

Since high transparency is required for the plastic sheet of the present invention, a resin having high transparency is used. As the resin having high transparency, for example a thermoplastic resin or a thermosetting resin can be used.

Examples of the thermoplastic resin include a polycarbonate resin, a polyamide resin, an acrylic resin, a polyester resin, a polyurethane resin, a polyvinyl chloride resin, a polyvinylidene chloride resin, an ABS resin, a polystyrene resin, a norbornene resin, a polyethylene vinyl alcohol resin, an acylcellulose resin and the like.

In particular, a polycarbonate resin, a transparent polyamide resin (a transparent nylon resin), an acrylic resin, a polyester resin, a polyurethane resin, an acylcellulose resin, and a polymer alloy thereof, which have high transparency, are easily formed into a sheet and have relatively high hardness, are preferable. Those modified with a rubber component and the like to obtain toughness are preferable.

A plastic sheet is generally prepared from these resins by an extrusion-molding method. The extrusion-molding method is a method for producing a plastic sheet by extruding a heat-melted resin from a sheet die or a T die. The plastic sheet may remain as it is, or may be produced by further uniaxially stretching or biaxially stretching the heat-melted resin.

In addition, there are a plastic sheet obtained by means of a dry film casting method, comprising flow-casting a solution prepared by dissolving these resins and desolvating the solution to perform film formation by a dry method, and a plastic sheet obtained by means of wet film casting method, comprising leading a resin solution extruded from a sheet die or a T die to a coagulation bath, and desolvating the solution to perform film formation by a wet method. Both methods can be used.

Examples of the thermosetting resin include a polyurethane resin, an acrylic resin, an epoxy resin, a polyester resin, a cured body of allyl compounds such as diethylene glycol diallyl carbonate (CR39) and diallyl phthalate, polythiourethane, a cured body of an episulfide, a polyimide resin and the like.

These heat-curable resins can be generally used as a plastic sheet suitable for the present invention by polymerizing between plates, or with a wet film casting method.

Generally, the plastic sheet used in the present invention may be any of a thermoplastic resin or thermosetting resin. A thermoplastic resin capable of extrusion molding is preferably used because of easiness of producing a plastic sheet and obtaining a uniform sheet, and the low manufacturing costs.

It is also recommended that Shore D hardness measured according to ISO 868 for resin is 65 or more, preferably 70 or more.

When Shore D hardness is less than 65, there is a possibility that surface hardness of an optical article can not be increased.

In the present invention, a plastic sheet of a polycarbonate resin, a transparent polyamide resin (transparent nylon), an acrylic resin, a polyester resin, a polyurethane resin, and a polymer alloy thereof, which can be extrusion-molded, can easily afford a plastic sheet at a low cost and which have high Shore D hardness, are preferably used.

The thickness of the plastic sheet is preferably between 5 µm and 2 mm, more preferably between 10 µm and 1.5 mm. In the case of less than 5 µm, when proving the resin layer mentioned below on one side, wrinkles may be caused in a plastic sheet, and thereby it becomes a cause of coating spots. Further, when the resin layer is soft, its softness influences even the surface of a plastic sheet. Thereby an optical article with low surface hardness may be prepared.

When the thickness of a plastic sheet exceeds 2 mm, there is a tendency that bending in a bent processing step described below would be difficult.

The resin layer of the present invention is provided on one side of a plastic sheet, and the resin layer also becomes a layer holding an electromagnetic wave absorbing agent, such as a visible light absorbing agent, ultraviolet absorbing agent or infrared absorbing agent, or a photochromic dye, while it is an adhesion functional layer of a plastic sheet and a backup resin.

The resin used for a resin layer should be selected based on the kind of the backup resin, and the kind of the electromagnetic wave absorbing agent.

Generally, a resin which easily provides a thin layer is suitable. Examples of the resin include a polyurethane resin, an acrylic resin, a polyester resin, a polyamide resin, an epoxy resin, a phenol resin, a urea melamine resin and the like.

The resin layer can be prepared on one side of the above-mentioned plastic sheet by using an applying method or transferring method.

The applying method refers to a method for producing a resin layer by coating a component of a resin layer itself or a solution in which the component of the resin layer is dissolved, on one side of a plastic sheet, and optionally, by desolvating it. The applying method uses techniques such as a dipping method, a flow coating method, a roll coater method, a spray coating method, a bar coater method, a screen printing method, a gravure method and an offset printing method.

When a resin layer component is at an uncured stage and in a liquid state, the resin layer component is applied to a plastic sheet, and heat cured after coating, or electromagnetically cured by irradiating with electromagnetic waves such as ultraviolet radiation. This method is applicable to polyurethane resins, acrylic resins, epoxy resins and the like.

When a resin layer component is a polymer or oligomer, or when viscosity of a resin layer component is high even at an uncured stage, the resin layer component is dissolved in a solvent to prepare a solution, and the solution is applied to a plastic sheet. After applying the solution, the solvent is removed by heating, evacuation treatment, or air-drying. Then the curing may further proceed by increasing a degree of heating, or irradiating with electromagnetic waves such as ultraviolet radiation and an electron beam.

The applying method at solution state is applicable to polyurethane resins, acrylic resins, polyester resins, polyamide resins, epoxy resins, phenol resins, urea melamine resins and the like.

The transferring method is a method for transferring a resin layer to one side of a plastic sheet by firstly pre-forming a resin layer on a second sheet other than the plastic sheet, then by overlapping the second sheet on which the resin layer was formed with the plastic sheet such that the formed resin layer is contacted with the plastic sheet, and then by applying heat or pressure.

In the present invention, an especially preferable resin layer is a resin layer which has high transparency, and which is a less brittle resin. In particular, the resin layer is preferably any of a polyurethane resin, an acrylic resin, a polyester resin, a polyamide resin and an epoxy resin, or a mixture or polymer alloy thereof.

Examples of the polyurethane resin preferably used in the resin layer include a straight-chain polyurethane resin and a cross-linked polyurethane resin.

The straight-chain polyurethane resin is an addition polymer of isocyanate group and alcoholic hydroxyl group, and is a polyurethane resin in which diisocyanate and diol are chemically bound in a straight-chain form.

Examples of the diisocyanate include an aromatic diisocyanate represented by tolylene diisocyanate (TDI), methaxylylene diisocyanate (MDI), diphenylmethane-4,4'-diisocyanate, diphenyl ether 4,4'-diisocyanate, and 1,5-naphthalene diisocyanate, and an aliphatic diisocyanate represented by hexamethylene diisocyanate, isophorone diisocyanate, hydrogenated TDI, and hydrogenated MDI.

These diisocyanate are used alone or in mixture. The aliphatic diisocyanate is especially preferable since its xanthochroism is low.

As a viscosity modifier, monoisocyanates such as hexanemonoisocyanate may be further added at a small amount.

Since a reaction rate of isocyanate group with an alcoholic hydroxyl group is generally high, a mixture of diisocyanate and diol easily becomes a gel. Upon forming a resin layer by an applying method, since gelling interferes with the application operation, isocyanates with a gelling velocity as slow as possible are preferable. Therefore, it is also preferable to suppress gelling velocity using a blocked isocyanate in which isocyanate group is blocked.

A diol is an aliphatic glycol represented for example by ethylene glycol, 1,3-propaneglycol, 1,4-butaneglycol, and 1,6-hexaneglycol; a polyether-based glycol represented by polyethylene glycol, polypropylene glycol, polyethylene propylene glycol, and polytetramethylene glycol; a polyester-based glycol represented by caprolactone-based, adipate-based, and copolyester-based; carbonate-based glycol; an aromatic glycol represented by bisphenol A, an ethylene oxide adduct of bisphenol A, and a propylene oxide adduct of bisphenol A; and the like. These diols are used alone or in mixture.

In particular, from a view point of non-xanthochroism, hydrolysis resistance, a heat adhesive property with a backup resin, and transparency, the present invention preferably uses "ELASTOLLAN" ET590, "ELASTOLLAN" ET595, and "ELASTOLLAN" ET598, which are a polyester-based polyurethane of BASF, and polyether-based glycol and polyester-based glycol described as polyether-based polyurethanes of the aforementioned company.

A dithiol having two thiol groups in its molecule, such as 2,2'-dimercaptoethyl ether, or a compound having one alcoholic hydroxyl group and one thiol group in its molecule, such as 2-mercaptoethanol, can be used instead of a diol.

A compound having an amino group can be also added auxiliary instead of an alcoholic hydroxyl group or thiol group.

As a viscosity modifier, a compound having one active hydrogen, e.g., a compound having one alcoholic hydroxyl group, such as propyl alcohol, or a compound having one secondary amino group, such as *N*-methylpropylamine, can also be added.

Some methods for forming a resin layer of a straight-chain polyurethane resin on one side of a plastic sheet are exemplified below.

Firstly, there is a method for forming a resin layer by applying a composition (a catalyst such as tin-based catalysts may be contained) comprising a diisocyanate and a diol at an equivalence ratio to one side of a plastic sheet by an applying method, and polymerizing the applied layer.

Another method comprises applying the above-mentioned composition dissolved in a solvent to one side of a plastic sheet by an applying method, and polymerizing the applied layer after or while desolventing to form a resin layer.

In a case where the above-mentioned composition becomes an oligomer in advance, another method comprises applying the oligomer to one side of a plastic sheet, or applying a solution in which the oligomer was dissolved in a solvent to one side of a plastic sheet, and polymerizing the applied layer after or while desolventing to form a resin layer.

In a case where the above-mentioned composition becomes a polyurethane polymer in advance, another method comprises applying a polyurethane solution prepared by dissolving the polyurethane polymer in a solvent such as dimethylformamide to one side of a plastic sheet, and desolventing it to form a resin layer.

A cross-linked polyurethane is an addition polymer of a higher valent isocyanate not less than triisocyanate and a diol, or an addition polymer of an isocyanate and a higher valent compound not less than triol, or an addition polymer of an isocyanate not less than triisocyanate and a compound not less than triol.

Polymeric polyphenyl polyisocyanate is representative as an example of a isocyanate not less than triisocyanate.

There are glycerin, trimethylolpropane, pentaerythritol, and the like as examples of the compound not less than triol.

Instead of the compound not less than triol, a compound having a total of three or more of mercapto groups and alcoholic hydroxyl groups in total in its molecule, may be used.

A monoisocyanate or mono-ol may be added for the purpose of an adjustment of a cross-link density, or an adjustment of viscosity of an applying liquid.

Some methods for forming a resin layer of a cross-linked polyurethane resin on one side of a plastic sheet are exemplified below.

Firstly, an isocyanate (if necessary, a diisocyanate or monoisocyanate may be added) not less than triisocyanate in an uncured stage, and a compound (if necessary, a diol or mono-ol may be added) having an alcoholic hydroxyl group not less than triol are included (a catalyst such as a tin-based catalyst may be included) at an approximate equivalence ratio, applied to one side of a plastic sheet, and polymerized to form a resin layer.

Another method comprises applying a solution in which a solvent is added to the above-mentioned composition, to one side of a plastic sheet, and polymerizing it after or while desolventing to form a resin layer.

The polyurethane resin layer, regardless of whether it is a straight-chain polyurethane resin or cross-linked polyurethane resin, is especially preferably used in the present invention because of a good heat adhesive property with a backup resin.

The acrylic resin preferably used for the resin layer is a straight-chain acrylic resin or cross-linked acrylic resin.

The straight-chain acrylic resin is one in which a compound having one acrylic double bond in its molecule is radical-polymerized.

Examples of the compound having one acrylic double bond in its molecule include a (meth)acrylate monomer such as methyl (meth)acrylate, ethyl (meth)acrylate, propyl (meth)acrylate and hydroxyethyl (meth)acrylate; a (meth)acrylic-based monomer such as acrylic acid, acrylamide and acrylonitrile; and the like.

The straight-chain acrylic resin is obtained by polymerizing a composition (which comprises a radical polymerization initiator, and may comprise a chain transfer agent and a polymerization inhibitor) of a (meth)acrylate monomer or a (meth)acrylic-based monomer alone, or a mixture thereof.

Some methods for forming a resin layer of a straight-chain acrylic resin on one side of a plastic sheet are exemplified below.

Firstly, in a case where the above-mentioned composition is at an unpolymerized stage, the composition is applied to one side of a plastic sheet by an applying method, irradiated with heating or ionizing radiation such as ultraviolet radiation, and polymerized on a plastic sheet to form a resin layer.

Another method comprises applying to one side of a plastic sheet a solution in which the above-mentioned composition is dissolved in a solvent, desolventing, and polymerizing it by heating or irradiating ionizing radiation such as ultraviolet radiation to form a resin layer.

In any case, progress of polymerization can be accelerated if a polymerization reaction is performed while blocking oxygen, for example, in a nitrogen flow.

In a case where the above-mentioned composition becomes an oligomer polymerized in advance, another method comprises applying the above-mentioned composition alone to one side of a plastic sheet, and polymerizing it to form a resin layer. Alternatively, the above-mentioned composition is dissolved in a (meth)acrylate monomer or a solvent such as alcohols to prepare a solution, the solution is applied to one side of a plastic sheet, and optionally desolvented, and polymerized to form a resin layer.

When the above-mentioned composition becomes a polymeric acrylic resin by a solution polymerization or emulsion polymerization in advance, a solvent such as an alcohol is added to the above-mentioned composition to prepare a solution, and the solution is applied to one side of a plastic sheet and desolvented to form a resin layer.

A cross-linked acrylic resin is one in which a composition comprising a polyfunctional (meth)acrylate having two or more acrylic double bonds in its molecule was radical-polymerized.

Examples of the compound having two acrylic double bonds in its molecule include ethylene glycol di(meth)acrylate, propylene glycol di(meth)acrylate, ethylene oxide modified bisphenol A di(meth)acrylate, trimethyrolpropan tri(meth)acrylate, pentaerythritol tri(meth)acrylate, di(meth)acrylate or tri(meth)acrylate of urethane diol or urethane triol, epoxydi(meth)acrylate, epoxy tri(meth)acrylate or the like.

In particular, urethane (meth)acrylate such as di(meth)acrylate or tri(meth)acrylate of urethane diol or urethane triol is preferable because it generally has a high heat adhesive property with a backup resin.

A polyfunctional (meth)acrylate having two or more acrylic double bonds in its molecule may be used in combination with a compound having one acrylic double bond in its molecule for adjusting a cross-link degree and viscosity.

A method of forming the resin layer of a cross-linked acrylic resin on one side of a plastic sheet is exemplified below.

A composition of (meth)acrylate monomer of two double bonds or higher functionality as mentioned above, such as di(meth)acrylate, tri(meth)acrylate, tetra(meth)acrylate or the like, and mono(meth)acrylate monomer or (meth)acrylic-based monomer optionally added (including a radical polymerization initiator, and optionally a chain transfer agent or a polymerization inhibitor), is applied as it is to one side of a plastic sheet by an applying method, or a solution in which the composition is dissolved in a solvent is applied to one side of a plastic sheet by an applying method, desolvented, and then heated or irradiated with ionizing radiation such as ultraviolet radiation, and a polymerization reaction is performed on a plastic sheet to form a resin layer. Progress of polymerization can be accelerated if a polymerization is performed while blocking oxygen, for example, in a nitrogen flow.

In addition, a cross-linked addition-polymer prepared by an addition reaction of di(meth)acrylate and trithiol, or tri(meth)acrylate and dithiol such as 2,2'-dimercapto ethyl ether, can be used for the resin layer of the present invention.

The polyester resin preferably used for the resin layer is a straight-chain polyester resin or cross-linked polyester resin.

The straight-chain polyester resin is the product of an esterification reaction of an aromatic dicarboxylic acid or aliphatic dicarboxylic acid with an aromatic diol or an aliphatic diol.

As the aromatic dicarboxylic acid, examples are phthalic acid, isophthalic acid, terephthalic acid and the like.

As the aliphatic dicarboxylic acid, examples are succinic acid, adipic acid, sebacic acid and the like.

As the aromatic diol, examples are bisphenol A, an ethyleneoxide adduct of bisphenol A, a propylene oxide adduct of bisphenol A, and the like.

As the aliphatic diol, examples are an aliphatic glycol such as ethylene glycol, 1,3-propaneglycol, 1,4-butaneglycol, 1,6-hexaneglycol and the like; a polyether-based glycol such as polyethylene glycol, polypropylene glycol, polyethylene propylene glycol, polytetramethylene glycol, and the like; a polyester-based glycol such as caprolactone-based, adipate-based, copolyester-based glycol, and the like; carbonate-based glycol; and the like.

As the diol, a polyether-based glycol and a polyester-based glycol are preferably used from a view point of a heat-resisting property or a hydrolysis resistance.

A method for forming a resin layer of a straight-chain polyester resin on one side of a plastic sheet is exemplified below.

Since an esterification reaction rate is generally low, a polyester resin polymerized by solution polymerization or block polymerization in advance is usually dissolved in a solvent such as methyl ethyl ketone or ethyl acetate to prepare a solution. Then, the solution is applied to one side of a plastic sheet by an applying method, and the solvent is removed by a desolvent method such as heating to form a resin layer.

The cross-linked polyester resin is a product of an esterification reaction of a dicarboxylic acid having an unsaturated double bond in its molecule such as maleic anhydride, and an aliphatic or aromatic diol.

Usually, a dicarboxylic acid having an unsaturated double bond in its molecule, and an aromatic or aliphatic dicarboxylic acid having no unsaturated double bond in its molecule are used in combination.

As the aromatic dicarboxylic acid used in combination with a dicarboxylic acid having unsaturated double bond(s), examples are phthalic acid, isophthalic acid, terephthalic acid and the like. Further, as the aliphatic dicarboxylic acid used in combination with a dicarboxylic acid having an unsaturated double bond, examples are succinic acid, sebacic acid, adipic acid and the like.

As the aliphatic diol, examples are an aliphatic glycol such as ethylene glycol, 1,3-propaneglycol, 1,4-butaneglycol, 1,6-hexaneglycol and the like; a polyether-based glycol such as polyethylene glycol, polypropylene glycol, polyethylene propylene glycol, polytetramethylene glycol and the like; and a polyester-based glycol such as caprolactone-based, adipate-based, copolyester-based, carbonate-based glycols; and the like.

As the aromatic diol, examples are bisphenol A, an ethyleneoxide adduct of bisphenol A, a propylene oxide adduct of bisphenol A and the like.

As the diol, polyether-based glycol and polyester-based glycol, which are difficult to be hydrolyzed, are preferably used.

A method for forming a resin layer of a cross-linked polyester resin on one side of a plastic sheet is exemplified below.

The cross-linked polyester resin (commonly referred to as an "unsaturated polyester resin") polymerized by a method such as solution polymerization in advance is dissolved in a solvent such as methyl ethyl ketone or ethyl acetate to prepare a solution. Then, the solution (comprising a radical polymerization initiator) is applied to one side of a plastic sheet by an applying method, and polymerized after desolventing to form a resin layer according to heating radical polymerization.

Further, a solution (comprising a radical polymerization initiator) prepared by dissolving a cross-linked polyester resin in a radical polymerizable compound such as styrene, vinyltoluene, methyl methacrylate and the like is applied to one side of a plastic sheet by an applying method, and is heat radical polymerized to form a resin layer.

Progress of polymerization can be accelerated if a polymerization reaction is performed while blocking oxygen, for example, in a nitrogen flow.

The polyamide resin preferably used for a resin layer is a straight-chain polyamide resin, and is a product of a condensation polymerization reaction of a diamine with a dicarboxylic acid.

As the diamine, examples are hexamethylenediamine, m-xylene amine, bis(p-aminocyclohexyl)methane, 3,3'-dimethyl-4,4'-diaminodicyclohexyl-methane, trimethyl hexamethylenediamine and the like.

As the dicarboxylic acid, examples are adipic acid, dodecanedioic acid, isophthalic acid, terephthalic acid and the like. An example is also a straight-chain polyamide obtained by ring-opening polymerizing a ring compound such as caprolactam.

Among the straight-chain polyamide, a resin named as amorphous nylon or transparent nylon is preferably used. They generally have low crystallinity, high transparency, and a good heat adhesive property with a backup resin.

As transparent nylon, "GRILAMID" TR55, "GRILAMID" TR90 and "GRILAMID" TR90UV of EMS-CHEMIE GmbH, "TROGAMID" CX7323 of DEGUSSA AG, "RILSAN" CLEAR G350 of ARKEMA Inc. and the like, can be exemplified.

A method for forming a resin layer of a straight-chain polyamide resin on one side of a plastic sheet is exemplified below.

Since a polymerization reaction rate of a polyamide is low, a polyamide resin pre-polymerized by a method such as solution polymerization and block polymerization is generally dissolved in a solvent such as alcohol to prepare a solution, and the solution is applied to one side of a plastic sheet by an applying method, and desolvented by heating to form a resin layer.

Examples of the epoxy resin preferably used for a resin layer is generally a cross-linked resin, and can include a cured substance of a compound having two or more epoxy groups with a curing agent such as amines, mercaptans, acid anhydrides, or a cured substance of an epoxy compound having two or more epoxy groups with a latent curing agent such as imidazoles and Lewis acids, or a ultraviolet-cured substance of an epoxy compound having two or more epoxy groups with a catalyst.

Epoxy compounds include those having a glycidyl group and those having an oxide group. Examples of the epoxy compound having two or more glycidyl groups include bisphenol A type of diglycidyl ethers, phenol novolak type of multi-functional glycidyl ethers, glycidyl ether type of epoxy compound such as triglycidyl isocyanurates and the like.

Examples of the compound having two or more oxide groups include a compound having two or more of cyclohexene oxide groups or tricyclodecenoxide groups as a representative.

Examples of the curing agent include amines such as diethylenetriamine, diaminodiphenylmethane and the like; mercaptans such as polymercaptan, polysulfide resin and the like; and acid anhydrides such as phthalic anhydride, trimellitic anhydride and the like. Further, examples of the latent curing agent include imidazoles such as 2-methylimidazole, 2-ethyl-4-methylimidazole and the like; and Lewis acids such as boron trifluoride, an aluminium chloride compound and the like. Further, examples of the ultraviolet curing catalyst include boron fluoride salts of aromatic diazoniums, tin chloride salts of aromatic diazoniums and the like.

A method for forming a resin layer of an epoxy resin on one side of a plastic sheet is exemplified below.

Firstly, a composition comprising an epoxy compound having two or more epoxy groups and a curing agent such as amines, mercaptans and acid anhydrides approximately at an equivalence ratio, or a composition comprising an epoxy compound having two or more epoxy groups and a small amount of a latent curing agent such as imidazoles and Lewis acids, is applied by an applying method to one side of a plastic sheet and heated, and a curing reaction is performed on a plastic sheet to form a resin layer.

Another method comprises applying a composition comprising a cycloaliphatic hydrocarbon compound having two or more oxide groups and a small amount of catalyst(s) to one side of a plastic sheet by an applying method, and irradiating with ultraviolet radiation, and polymerization reaction is performed on a plastic sheet to form a resin layer.

In any case, a compound or solvent having one glycidyl group such as n-butyl glycidyl ether can be used as a viscosity modifier.

The polyurethane resin, acrylic resin, polyester resin, polyamide resin, and epoxy resin, which are used preferably for the resin layer of the present invention, may be used by mixing them.

When such a mixed resin is used as a resin layer, a heat adhesive property with a backup resin to be injection-molded generally increases.

A combination of a preferable mixed resin used for a resin layer includes a mixture of a straight-chain polyurethane resin and a cross-linked acrylic resin. Particularly preferred it is a case where a mixture of a straight-chain polyurethane resin or straight-chain polyurethane oligomer which is polymerized in advance and a monomer of a cross-linked acrylic resin is applied to one side of a plastic sheet, and a cross-linked acrylic resin is polymerized on a plastic sheet to form a resin layer.

A combination of other preferable mixed resins includes a mixture of a straight-chain acrylic resin and a cross-linked polyurethane resin. Particularly preferred is a case where a mixture of a straight-chain acrylic resin or straight-chain acrylic oligomer which is polymerized in advance with a cross-linked polyurethane at an uncured stage is applied to one side of a plastic sheet, and the cross-linked polyurethane resin is polymerized on the plastic sheet (a straight-chain acrylic oligomer being also polymerized when the straight-chain acrylic oligomer is included) to form a resin layer.

As mentioned above, a resin for the resin layer includes a case of a straight-chain polymer and a case of a cross-linked polymer, and any case may accomplish the present invention. However, when the resin layer is a straight-chain polymer, a resin layer may melt or be transformed with heat or pressure upon injection-molding a backup resin. As a result, a thickness of a resin layer may change.

Since a resin layer may comprise as an electromagnetic wave absorbing agent any one of a visible light absorbing agent, ultraviolet absorbing agent, and infrared absorbing agent or a mixture thereof, a thickness unevenness of such a resin layer which may be caused by injection-molding of a backup resin, turns into unevenness of electromagnetic-wave-absorption performance. That is, since electromagnetic-wave-absorption performance changes in proportion to the thickness of the resin layer, uniform absorption performance cannot be obtained.

Specifically, hue unevenness, ultraviolet absorption unevenness, and infrared absorption unevenness for an optical article obtained by the present invention may be caused.

Therefore, it may be preferable that the resin layer is a resin layer of a heat-resistant cross-linked polymer rather than a resin layer of a straight-chain polymer, for the purpose of accomplishing the present application.

Examples of the visible light absorbing agent include coloring substances such as a dye and a pigment. By mixing a dye and/or a pigment into a resin layer, the permeability of natural light, illuminating light or laser light can be controlled, or fashionability can be improved by coloring in a preferable hue.

In particular, since a photochromic dye can increase a color developing rate and a color fading rate or can raise a color density by mixing the dye into a resin layer, it is the most preferable visible light absorbing agent.

Examples of the photochromic dyes include dyes which are spiro pyran-based, spiro oxazine-based, chromene-based, diaryl-eden-based, fulgide-based, cyclophane-based and the like, and dyes which are spiro oxazine-based and chromene-based are especially preferable because they are radical-polymerization resistant.

As the ultraviolet absorbing agent, a common ultraviolet absorbing agent as known for combination with a resin, and typical ultraviolet absorbing agents, such as a benzophenone compound and a benzotriazol compound, can be preferably used.

As the infrared absorbing agent, a common infrared absorbing agent as known for combination with a resin in addition to infrared absorbing agents such as diimmonium compounds, cyanine compounds, and copper carboxylate complexs can be preferably used.

Although it is common to mix these electromagnetic wave absorbing agents with a resin layer applying liquid at a stage before applying to a plastic sheet, an organic compound can also be impregnated into the surface of a resin layer, or can be stained afterwards in a case of the organic compound such as a dye and a pigment.

The electromagnetic wave absorbing agent mixed with a resin layer should not become a cause of turbidity (haze) for visible light. Therefore, the electromagnetic wave absorbing agent is dissolved or dispersed at an optical level in the resin layer. The optical level described here means a particle size being about 100 nm or less.

The amount of the electromagnetic wave absorbing agent mixed with a resin layer should be decided according to a thickness of the resin layer, the kind of the electromagnetic wave absorbing agent, and electromagnetic-wave-absorption performance required. In general, the amount of the visible light absorbing agent, ultraviolet absorbing agent or infrared absorbing agent which comprises photochromic dye, is approximately 0.1 to 20% by weight.

The thickness of the resin layer is preferably between approximately 1 µm and 1 mm, more preferably between approximately 10 µm and 500 µm. When the thickness of the resin layer is less than 1 µm, the heat adhesive property and adhesion of the backup resin mentioned below have a tendency to be poor. In the case of a resin layer of less than 1 µm, even if an electromagnetic wave absorbing agent is mixed with the resin layer at a high concentration, since the thickness of the resin layer is too thin, the amount of the electromagnetic wave absorbing agent is insufficient, and thereby it is difficult to obtain a sufficient electromagnetic wave absorption performance.

When the thickness of a resin layer exceeds 1 mm, the resin layer may be transformed upon injection-molding the backup resin, and thereby thickness unevenness easily occurs.

The plastic sheet of the present invention is not necessarily a monolayer sheet. A multilayer laminate sheet laminated with monolayer sheets can also accomplish the present invention.

The laminate sheet is formed by laminating monolayer sheets, and adhering the layers with a glue or adhesive or heat-adhering the layers.

Fundamentally, kinds of resins used for each layer in the laminate sheet and a process of forming a monolayer sheet are the same as the case of the monolayer sheet as mentioned above.

The thickness of the laminate sheet is generally between 20 µm and 2 mm, more preferably between 50 µm and 1.5 mm. When it is less than 20 µm, it may be difficult to prepare it, and when it exceeds 2 mm, it may be difficult to perform bend processing as described below.

Although the number of laminations for the laminate sheet is not specifically limited, a fundamental lamination form is a laminate sheet of three-layer structure in which two monolayer sheets are adhered with one adhesive layer (a layer of a glue or adhesive).

As the glue, polyurethane resin, acrylic resin, polyester resin, polyamide resin, epoxy resin and rubbers are preferably used from a view point of a water resisting property.

Any one or more layer(s) of the monolayer sheets or the adhesive layer which constitutes a laminate sheet may comprise an electromagnetic wave absorbing agent. In particular, it is preferable that the electromagnetic wave absorbing agent is contained in an adhesive layer.

The kind, particle size and usage of a preferable electromagnetic wave absorbing agent contained in a laminate sheet, are fundamentally the same as the electromagnetic wave absorbing agent contained in the resin layer as mentioned above.

That is, examples of the electromagnetic wave absorbing agent can include a visible light absorbing agent, ultraviolet absorbing agent, and infrared absorbing agent. As one aspect of the invention where the plastic sheet is a laminate sheet, a polarizing plate can be mentioned which is prepared by holding a polarizer sheet of a uniaxially stretched polyvinyl alcohol sheet between two monolayer sheets, and adhering each layer of them with a glue.

For the polarizer sheet, those in which uniaxially stretched polyvinyl alcohol sheet is doped with iodine or a dichroic dye, are well known.

For the monolayer sheet, an acylcellulose resin sheet prepared by a dry film casting method, and a uniaxially stretched polycarbonate sheet prepared by an extrusion-molding method are well known.

When the laminate sheet is a polarizing plate, the sheet preferably has a thickness between 20 µm and 1.5 mm, more preferably between 100 µm and 1.2 mm. When it is less than 20 µm, it may become difficult to prepare it and when it exceeds 1.2 mm, it may be difficult to perform a bending processing.

The optical article of the present invention is produced by injection-molding a backup resin on a resin layer provided on one side of a plastic sheet. Upon injection-molding the backup resin, a plastic sheet is formed in advance into a shape close to an intended shape of the optical article.

Since the optical article of the present invention is preferably used as a vision correction lens, or sunglasses, or a protection lens of eyes or face, a plastic sheet is formed in advance into a shape of a lens.

Therefore, bend-processing into a spherical shape or a shape close to it, or a cylindrical shape is performed in advance.

The bend-processing is performed by setting a plastic sheet provided with a resin layer on a forming mold to heat press it under a temperature condition not lower than a temperature close to its glass transition temperature, or by performing evacuation sucking of the plastic sheet under the environmental condition not lower than a temperature near its glass transition temperature.

Since the backup resin is injection molded on a side of the resin layer, when the backup resin is injection-molded on a concave surface side of a lens, the plastic sheet is bend processed such that the resin layer is placed at a concave surface.

Injection-molding of a backup resin can be performed as follows:
The bent-processed plastic sheet (hereinafter, referred to as an "insert") is set in a mold of an injection-molding machine, the mold is closed, and the backup resin is injected to the resin layer side. Insert injection-molding process as described in Japanese Publication No. 11-245259 is fundamentally preferable.

That is, it is a method of arranging an insert of which a heat adhering surface is put inside on one side of a mold to injection-mold the backup resin.

Among the injection-molding method, an injection-compression-molding method is a method for applying compressive force to a resin by closing a mold at a high pressure after injecting the resin into a mold at a low pressure, and the method can reduce an optically anisotropy resulting from the molding strain of a plastic solid and a local molecular orientation of a molded resin. Further, since the resin can be cooled with a fixed specific volume by controlling a mold compressive force, molded products having high dimensional accuracy are obtained.

The resin used for a backup is preferably a thermoplastic resin having high transparency, and examples of the resin include a polycarbonate resin, a polyamide resin, an acrylic resin, a polyester resin, a polyurethane resin, a polyvinyl chloride resin, a polyvinylidene chloride resin, an ABS resin, a polystyrene resin, a norbornene resin, a polyethylene vinyl acetate resin, an acylcellulose resin and the like.

In particular, a polycarbonate resin, a transparent polyamide resin (transparent nylon), an acrylic resin, a polyester resin, a polyurethane resin and an acylcellulose resin, which have high transparency and relatively high hardness, are preferable.

Further, it is recommended that Shore D hardness measured according to ISO 868 is 65 or more, preferably 70 or more.

When Shore D hardness is less than 65, surface hardness of an optical article may be insufficient. Further, a lens is easily bended and dropped out of a frame.

For a prescription lens, a sunglass lens, or a goggle lens, which are the major applications of the optical article of the present invention, since it is more preferable that they are shock resistant, preferably used are a polycarbonate resin, a transparent polyamide resin, a polyurethane resin, a polyester resin and an acrylic resin.

The backup resin may comprise an additive such as an antioxidant, a mold lubricant, an ultraviolet absorbing agent, an infrared absorbing agent, a dye, an antistatic agent and the like.

For a plain lens (plano lens), it is recommended that a thickness of the backup resin layer is 0.3 mm or more, preferably 0.4 mm or more. When the thickness is less than 0.3 mm, it is difficult to perform insert injection-molding, and there is a possibility that a reinforcing effect on impact strength resistance may become insufficient. Although there is in particular no maximum limitation of the thickness of a backup resin layer, it is generally 40 mm or less.

When a plano lens is used for sunglasses, a goggle lens or a protection lens of an eye or a face such as a shield, and when the thickness of the backup resin layer exceeds 1.5 mm, a refracting power of a minus side may become conspicuous as departing farther away from a center to a periphery of a lens.

As measures in that case, the thickness is gradually reduced towards the periphery of a lens, and canceling a refracting power of a minus side is preferably performed by providing a refracting power of a plus side.

In addition, in the case of a prescription lens, its thickness varies depending on locations of the lens.

In the lens manufactured in accordance with the present invention, its surface may be hard coated. As the hard coats, a heat-curable hard coats such as those of silane-based, epoxy-based and the like; and an active light curable hard coats such as those of crylic-based, epoxy-based and the like are generally used. The thickness of the hard coats is usually approximately between 0.5 and 15 µm.

In addition, before hard coating, primer coats such as acrylic-based and polyurethane-based may be provided for the purpose of improving adhesion of a hard coats or shock resistance of a lens.

Further, for the lens manufactured in accordance with the present invention, anti-reflection processing may be provided on at least either side. Anti-reflection processing is usually provided by a vacuum deposition method on hard coats.

Further, for the lens manufactured in accordance with the present invention, defogging processing may be provided on either side or two sides. The defogging processing can be provided by forming a film of hydrophilic resin such as polyvinyl alcohol or polyvinyl pyrrolidone or a surfactant at a thickness of approximately 1 µm to 50µm.

Further, for the lens manufactured in accordance with the present invention, antifouling processing may be provided on either side or two sides. The antifouling processing can be provided by forming a film of a fluorine-based organic compound at a thickness of approximately several tens nm to 1 µm by a vacuum deposition method or a wet method usually aiming to prevent marks such as fingerprints on an anti-reflection film and to make marks such as fingerprints easy to be wiped out.

Further, for the lens manufactured in accordance with the present invention, mirror processing may be provided on either side or two sides. The mirror processing can be provided by forming a metallic film of aluminum, silver, gold, platinum and the like or a metal oxide film by a vacuum deposition method and the like.

### Examples

### Example 1

As a plastic sheet, a casted polycarbonate resin sheet (Shore D hardness measured according to ISO 868 is 93) without an ultraviolet absorbing agent, having a thickness of about 200 µm was formed by an extrusion-molding method.

As a resin layer, cross-linked polyurethane obtained by reacting isophorone diisocyanate with a mixed polyol (weight ratio) of glycerol 20 and polypropylene glycol 80 having hydroxyl value of 200 was used.

A photochromic dye was used as an electromagnetic wave absorbing agent. That is, a photochromic dye "Rush Yellow" of JAMES ROBINSON Ltd. was added to diol at 0.5 wt% based on the cross-linked polyurethane.

Polyol in which the photochromic dye was dissolved and isophorone diisocyanate were mixed at an equivalence ratio, and 0.15 wt% of each of triethanolamine and tin octylate were immediately mixed to prepare an applying liquid of the cross-linked polyurethane.

The applying liquid after vacuum degassing was applied to the above-mentioned polycarbonate resin sheet using a bar coater. After applying, cross-linking formation and a curing treatment were performed in an oven at 80 °C for 2 hours to form a resin layer.
The film thickness was 40 µm.

Subsequently, the polycarbonate resin sheet on which the resin layer was formed was punched out to obtain a circle form having 90 mm in diameter. Then, the punched- out circle form was set to a bend processing machine such that the polycarbonate resin sheet is placed on a convex surface and the resin layer is placed on a concave surface.

A bend processing machine has a cup having a diameter of 78 mm and a curvature of 8. When the circle form is set on the cup, it is bend processed into a sphere form under a condition of about 125 °C with suctions from a bottom of the cup and a movable type of pushing pad from the upper part of the cup. Then, the bend processed circle form (an insert) is set in the center of a concave mold of an injection-molding machine provided with a mold having a curved surface at a curvature of 8.

The concave mold and the convex surface mold were overlapped, the mold was closed, and a polycarbonate resin (Shore D hardness measured according to ISO 868 is 93) was used as a backup resin to injection-mold the backup resin layer on the resin layer.

The completed optical article had in the center a resin layer of the cross-linked polyurethane containing the photochromic dye inside, and it had a laminate structure in which the resin layer was sandwiched with a convex polycarbonate resin sheet and a concave polycarbonate resin. The optical article had a curved surface at a curvature of 8, and it was a photochromic lens having a thickness of 1.5 mm.

### Example 2

As a resin layer, a cross-linked urethane acrylate (pentaerythritol triacryrate hexamethylene diisocyanate urethane prepolymer (urethane acrylate UA-306H of Kyoeisha chemicals Co., Ltd.)) was used. The urethane acrylate was dissolved in isopropyl alcohol to prepare a 30wt% solution. To this solution, a spirooxazine-based photochromic dye "Red" test-manufactured by Toray Industries Inc. and an ultraviolet curing agent ("IRGACURE" 184 of Ciba Japan KK) were added at 2 wt% and 3 wt% based on the above-mentioned urethane acrylate, respectively.

The above-mentioned urethane acrylate solution containing the photochromic dye and the ultraviolet curing agent was applied to a casted polycarbonate resin sheet having a thickness of about 200 µm as prepared in Example 1 by using a bar coater. After application, it was placed into a hot-air oven to remove isopropyl alcohol. Since the polycarbonate sheet on which a resin layer was formed is strongly curled while retaining the resin layer inside, it was placed on a glass plate to make it flat, and irradiated with ultraviolet radiation in this state to crosslink UA-306H. The thickness of the resin layer after cross-linking was 35 µm.

Except for using polymethyl methacrylic resin (PMMA, Shore D hardness measured according to ISO 868 is 95) as a backup resin, an optical article was produced in the same manner as in Example 1.

The completed optical article had in the center a resin layer of the cross-linked polyurethane acrylate containing the photochromic dye inside, and it had a laminate structure in which the resin layer was sandwiched with a convex polycarbonate resin sheet and a concave polymethyl methacrylic resin. The optical article had a curved surface at a curvature of 8, and it was a photochromic lens having a thickness of 1.5 mm.

### Example 3

An epoxy resin ("jER" 828 of Japan Epoxy Resin Co., Ltd., epoxy equivalent 185) was dissolved in benzene to prepare a 30 wt% solution. To this solution, a photochromic dye "Misty Grey" of JAMES ROBINSON Ltd. was added at 2 wt% based on the epoxy resin. Then, the benzene was removed under a reduced pressure with a rotating evaporator.

The above-mentioned epoxy resin comprising the photochromic dye was heated to 50 °C, an equivalent amount of hexaethylenediamine (a curing agent) was added, and they were mixed immediately to obtain an applying liquid.

Then, the mixed liquid was applied to a casted polycarbonate resin sheet having a thickness of about 200 µm as prepared in Example 1 by using a bar coater. It was placed into a hot-air oven at 80 °C, cured for 5 hours, and cross-linked to form a resin layer having a thickness of 40 µm.

Using the polycarbonate resin of Example 1 as a backup resin, an optical article was produced in the same manner as in Example 1.

The completed optical article had in the center a resin layer of the cross-linked epoxy resin containing the photochromic dye inside, and it had a laminate structure in which the resin layer was sandwiched with a convex polycarbonate sheet and a concave polycarbonate resin. The optical article had a curved surface at a curvature of 8, and it was a photochromic lens having a thickness of 1.5 mm.

### Example 4

Except for using a polyethylene terephthalate (PET) resin (Shore D hardness measured according to ISO 868 is 90) as a backup resin, an optical article was produced in the same manner as in Example 1.

The completed optical article had in the center a resin layer of the cross-linked polyurethane containing the photochromic dye inside, and it had a laminate structure in which the resin layer was sandwiched with a convex polycarbonate sheet and a concave polyethylene terephthalate resin. The optical article had a curved surface at a curvature of 8, and it was a photochromic lens having a thickness of 1.5 mm.

### Example 5

As a plastic sheet, a biaxially stretched polyethylene terephthalate (PET) sheet (Shore D hardness measured according to ISO 868 is 90, Toray Industries, Inc.) having a thickness of about 200 µm was formed.

As components of the resin layer, a cross-linked urethane acrylate (phenyl glycidyl ether acrylate toluene diisocyanate urethane prepolymer (urethane acrylate AT-600 of Kyoeisha chemicals Co., Ltd.)) and a thermoplastic polyurethane (polyester-based polyurethane "ELASTOLLAN" C74D of BASF Polyurethane Elastomers Ltd.) were prepared.

The same weights of AT-600 and C74D were weighted out, and dissolved in *N,N*-dimethylformamide (DMF) to prepare a 40 wt% solution. To this solution, an infrared absorbing agent (IRG-022 of Nippon Kayaku Co., Ltd.), and an ultraviolet curing agent ("IRGACURE" 184 of Ciba Japan KK) were added at 4 wt% and 2 wt% based on the solid component, respectively, to obtain an applying liquid.

The above-mentioned applying liquid was applied to the above-mentioned PET sheet by using a bar coater. The resin layer after removing DMF was a film having a thickness of 43 µm.

Since the PET sheet after applying the resin layer is strongly curled while retaining the resin layer inside, it was placed on a glass plate to make it flat, and irradiated with ultraviolet radiation to cross-link AT-600.

Using a thermoplastic polyurethane (polyester-based polyurethane "ELASTOLLAN" C74D of BASF Polyurethane Elastomers Ltd., Shore D hardness measured according to ISO 868 is 73) as a backup resin, an optical article was produced in the same manner as in Example 1.

The completed optical article had a laminate structure in which a thermoplastic polyurethane C74D and a cross-linked urethane acrylate AT-600 formed an interpenetrated Network, and in which the resin layer containing a near-infrared absorbing agent inside was sandwiched with a convex PET sheet and a concave polyurethane resin. The optical article had a curved surface at a curvature of 8, and it was a near-infrared absorbing lens having a thickness of 1.5 mm.

### Example 6

Except for using a transparent nylon "GRILAMID" TR55 (Shore D hardness measured according to ISO 868 is 85) of EMS-CHEMIE company as a backup resin, an optical article was produced in the same manner as in Example 1.

The completed optical article had in the center a resin layer of the cross-linked polyurethane containing the photochromic dye inside, and it had a laminate structure in which the resin layer was sandwiched with a convex polycarbonate sheet and concave transparent Nylon. The optical article had a curved surface at a curvature of 8, and it was a photochromic lens having a thickness of 1.5 mm.

### Example 7

As a plastic sheet, a cross-linked acrylic sheet (Shore D hardness measured according to ISO 868 is 96) having a thickness of 230 µm formed by polymerizing a mixed methacrylate of methyl methacrylate 80 and pentaerythritol tetramethacrylate 20 (weight ratio) between plates, was used.

The polyester-based polyurethane, "ELASTOLLAN" C74D, of BASF Polyurethane Elastomers Ltd. was dissolved in DMF to prepare a 40 wt% solution. To this solution, a photochromic dye "Misty Grey" of JAMES ROBINSON Ltd. was added at 2 wt% based on the solid component to prepare an applying liquid for resin layers.

The above-mentioned applying liquid was applied to the above-mentioned cross-linked acrylic sheet by using a bar coater. It was placed into a vacuum dryer after applying to completely remove DMF. The resin layer after removing DMF was a film having a thickness of 48 µm.

Using the polycarbonate resin of Example 1 as a backup resin, an optical article was produced in the same manner as in Example 1.

The completed optical article had a laminate structure in which a resin layer of the thermoplastic polyurethane containing the photochromic dye inside was sandwiched with a convex cross-linked acrylic sheet and a concave polycarbonate resin. The optical article had a curved surface at a curvature of 8, and it was a photochromic lens having a thickness of 1.5 mm.

### Example 8 (Reference Example)

As a plastic sheet, a polymethyl methacrylic resin sheet (PMMA, Shore D hardness measured according to ISO 868 is 95) having a thickness of about 250 µm was prepared.

As an electromagnetic wave absorbing agent included in a resin layer, a lead compound which is an absorbing agent of X-rays or γ-rays was used. That is, lead acrylate 10, acrylic acid 30, methyl methacrylate 40, and ethylene glycol dimethacrylate 20 and an ultraviolet curing agent ("IRGACURE" 184 of Ciba Japan KK) 4 (weight ratio) were well mixed to prepare an applying liquid.

The applying liquid was applied to a PMMA sheet using a bar coater, and irradiated with ultraviolet radiation to cross-link and cure. The completed resin layer had a thickness of 100 µm.

Subsequently, it was bend-processed into a sphere form at 100 °C in the same manner as in Example 1. Except for using a PMMA resin (Shore D hardness measured according to ISO 868 is 95) as a backup resin, a backup resin layer was injection molded on a resin layer in the same manner as in Example 1.

The completed optical article had in the center a resin layer of the cross-linked acrylic resin containing lead inside, and it had a laminate structure in which the resin layer was sandwiched with a convex PMMA sheet and a concave PMMA resin. The optical article had a curved surface at a curvature of 8, and it was an X-ray or a γ-ray absorbing lens having a thickness of 3 mm.

### Example 9

A polarizer sheet (a polyvinyl alcohol sheet prepared by a color staining technique, a stretch rate is 4.0) having a thickness of about 30 µm was held between two sheets of stretched polycarbonate resin sheets (a stretch rate is 4.0, Shore D hardness measured according to ISO 868 is 93) having a thickness of about 400 µm without an ultraviolet absorbing agent, formed by an extrusion molding method, and the stretched resin sheet and the polarizer sheet were adhered with an acrylic-based glue. A polarizing plate having a thickness of about 850 µm was formed.

A cross-linked urethane acrylate (pentaerythritol triacrylate hexamethylene diisocyanate urethane prepolymer (urethane acrylate UA-306H of Kyoeisha chemicals Co., Ltd.)) was dissolved in isopropyl alcohol to prepare a 30 wt% solution. To this solution, a spirooxazine-based photochromic dye "Red" test-manufactured by Toray Industries Inc. and an ultraviolet curing agent ("IRGACURE" 184 of Ciba Japan KK) were added at 2 wt% and 3 wt% based on the above-mentioned urethane acrylate, respectively.

The above-mentioned urethane acrylate solution containing the photochromic dye and the ultraviolet curing agent was applied to one side of the above-mentioned polarizing plate using a bar coater. It was placed into a hot-air oven to remove isopropyl alcohol. The thickness of the resultant cross-linked urethane acrylate layer was about 50 µm.

The cross-linked urethane acrylate layer was irradiated with ultraviolet radiation, and the urethane acrylate layer was cross-linked to form a resin layer.

The polarizing plate with a resin layer was punched out circularly, bent processed, and inserted into an injection-molding machine, and a backup resin was laminated in the same manner as in Example 1 to produce an optical article.

The completed optical article had a laminate structure in which the cross-linked polyurethane resin layer containing the photochromic dye inside was sandwiched with the polarizing plate on a convex side and the polycarbonate resin on a concave side. The optical article had a curved surface at a curvature of 8, and it was a polarization photochromic lens having a thickness of 1.8 mm.

The optical articles obtained in Examples 1-9 have high surface hardness, and does not have defects such as a limitation in kinds of available electromagnetic wave absorbing agents, a high manufacturing cost, conformity of a plastic sheet and a backup resin and the like. The various technical problems in the conventional production method (Methods A-F) could have been solved.

According to the present invention, an optical article which is a lens that absorbs any one of visible light, ultraviolet radiation, and infrared radiation, in particular, a functional optical article represented by a prescription lens, sunglasses, a goggle lens, a shield, or an optical filter can be provided.

## Claims

1. A process for manufacturing a lens which comprises a laminated substance wherein a plastic sheet, a resin layer prepared on said plastic sheet and containing an electromagnetic wave absorbing agent, and a backup resin are laminated in this order,
and wherein the electromagnetic wave absorbing agent is any one of a visible light absorbing agent, an ultraviolet absorbing agent, and an infrared absorbing agent or a mixture thereof, and is dissolved or dispersed at an optical level in the resin layer,
said process being **characterized in that**
a plastic sheet is bend-processed in advance into a spherical shape or a shape close to it, or a cylindrical shape,
and then the backup resin is injection molded on the resin layer provided on a concave surface side of the bend-processed plastic sheet.

2. The process according to claim 1 wherein the electromagnetic wave absorbing agent is a photochromic dye.

3. The process according to claim 1 or 2 wherein the resin layer is any of a polyurethane resin, an acrylic resin, a polyester resin, a polyamide resin and an epoxy resin, or a mixture thereof.

4. The process according to claim 3 wherein the resin layer is a resin layer of a cross-linked polymer.

5. The process according to claim 3 wherein the resin layer is a substance cured by heat-curing a polyurethane composition.

6. The process according to claim 3 wherein the resin layer is a substance cured by heat-curing, by electromagnetically curing or by curing with a combination thereof an acrylic composition.

7. The process according to claim 3 wherein the resin layer is a substance cured by heat-curing an unsaturated polyester.

8. The process according to claim 3 wherein the resin layer is a substance cured by heat-curing, by ultraviolet-curing or by curing with a combination thereof an epoxy composition.

9. The process according to any one of claims 1, 2 and 5 to 8 wherein
the resin layer is a mixture of a straight-chain polymer and a cross-linked polymer.

10. The process according to claim 9 wherein the resin layer is a mixture of a straight-chain polyurethane resin and a cross-linked acrylic resin.

11. The process according to claim 9 wherein the resin layer is a mixture of a straight-chain acrylic resin and a cross-linked polyurethane resin.

12. The process according to any of claims 1 to 11 wherein the plastic sheet is a laminate sheet

13. The process according to claim 12 wherein any one or more of the layers in the laminate sheet contain(s) an electromagnetic wave absorbing agent,
wherein the electromagnetic wave absorbing agent in the laminated sheet is any of a visible light absorbing agent, an ultraviolet absorbing agent and an infrared absorbing agent, or a mixture thereof.

14. The process according to claim 13 wherein the electromagnetic wave absorbing agent is a photochromic dye.

15. The process according to any one of claims 13 or 14 wherein the electromagnetic wave absorbing agent is dissolved or dispersed at an optical level in any one or more of the layer(s) in the laminate sheet.

16. The process according to any one of claims 12 - 15 wherein the laminate sheet is a polarizing plate.

17. The process according to any one of claims 16, wherein the lens is a prescription lens, sunglasses, or a goggle lens.

## Patentansprüche

1. Ein Verfahren zur Herstellung einer Linse, die eine laminierte Substanz umfasst, wobei ein Kunststoffflächenmaterial, eine auf dem Kunststoffflächenmaterial hergestellte und ein elektromagnetische Wellen absorbierendes Mittel enthaltende Harzschicht, und ein Stützharz in dieser Reihenfolge laminiert sind,
und wobei das elektromagnetische Wellen absorbierende Mittel ein beliebiges eines sichtbares Licht absorbierenden Mittels, eines Ultraviolett absorbierenden Mittels und eines Infrarot absorbierenden Mittels oder ein Gemisch davon ist und auf einem optischen Niveau in der Harzschicht gelöst oder dispergiert ist,
wobei das Verfahren **dadurch gekennzeichnet ist, dass**
ein Kunststoffflächenmaterial im Voraus in eine sphärische Form oder eine dieser nahekommende Form oder eine zylindrische Form gebogen wird,
und dann das Stützharz auf die Harzschicht spritzgegossen wird, die auf einer konkaven Oberflächenseite des gebogenen Kunststofflächenmaterials bereitgestellt ist.

2. Das Verfahren nach Anspruch 1, wobei das elektromagnetische Wellen absorbierende Mittel ein photochromer Farbstoff ist.

3. Das Verfahren nach Anspruch 1 oder 2, wobei die Harzschicht ein beliebiges eines Polyurethanharzes, eines Acrylharzes, eines Polyesterharzes, eines Polyamidharzes und eines Epoxidharzes oder ein Gemisch davon ist.

4. Das Verfahren nach Anspruch 3, wobei die Harzschicht eine Harzschicht aus einem vernetzten Polymer ist.

5. Das Verfahren nach Anspruch 3, wobei die Harzschicht eine durch Wärmehärten einer Polyurethanzusammensetzung gehärtete Substanz ist.

6. Das Verfahren nach Anspruch 3, wobei die Harzschicht eine Substanz ist, die gehärtet ist durch Wärmehärten, durch elektromagnetisches Härten oder durch Härten mittels einer Kombination davon, einer Acrylzusammensetzung.

7. Das Verfahren nach Anspruch 3, wobei die Harzschicht eine Substanz ist, die gehärtet ist durch Wärmehärten eines ungesättigten Polyesters.

8. Das Verfahren nach Anspruch 3, wobei die Harzschicht eine Substanz ist, die gehärtet ist durch Wärmehärten, durch Ultraviolett-Härten oder durch Härten mittels einer Kombination davon, einer Epoxidzusammensetzung.

9. Das Verfahren nach einem der Ansprüche 1, 2 und 5 bis 8, wobei die Harzschicht ein Gemisch aus einem geradkettigen Polymer und einem vernetzten Polymer ist.

10. Das Verfahren nach Anspruch 9, wobei die Harzschicht ein Gemisch aus einem geradkettigen Polyurethanharz und einem vernetzten Acrylharz ist.

11. Verfahren nach Anspruch 9, wobei die Harzschicht ein Gemisch aus einem geradkettigen Acrylharz und einem vernetzten Polyurethanharz ist.

12. Das Verfahren nach einem der Ansprüche 1 bis 11, wobei das Kunststoffflächenmaterial ein Laminat-Flächenmaterial ist.

13. Das Verfahren nach Anspruch 12, wobei eine oder mehrere der Schicht(en) in dem Laminat-Flächenmaterial ein elektromagnetische Wellen absorbierendes Mittel enthält/enthalten,
wobei das elektromagnetische Wellen absorbierende Mittel in dem Laminat-Flächenmaterial ein beliebiges eines sichtbares Licht absorbierenden Mittels, eines Ultraviolett absorbierenden Mittels und eines Infrarot absorbierenden Mittels oder ein Gemisch davon ist.

14. Das Verfahren nach Anspruch 13, wobei das elektromagnetische Wellen absorbierende Mittel ein photochromer Farbstoff ist.

15. Das Verfahren nach einem der Ansprüche 13 oder 14, wobei das elektromagnetische Wellen absorbierende Mittel auf einem optischen Niveau in einer oder mehreren der Schicht(en) in dem Laminat-Flächenmaterial gelöst oder dispergiert ist.

16. Das Verfahren nach einem der Ansprüche 12 bis 15, wobei das Laminat-Flächenmaterial ein Polarisationsschild ist.

17. Das Verfahren nach einem der Ansprüche 1 bis 16, wobei die Linse eine Korrektionslinse/ein Korrektionsglas, eine Sonnenbrille oder eine Schutzbrillenlinse ist.

## Revendications

1. Procédé de fabrication d'une lentille qui comprend une substance stratifiée, dans lequel une feuille de matière plastique, une couche de résine préparée sur ladite feuille de matière plastique et contenant un agent absorbant les ondes électromagnétiques et une résine de renfort sont laminées dans cet ordre,
et dans lequel l'agent absorbant les ondes électromagnétiques est l'un quelconque parmi un agent absorbant la lumière visible, un agent absorbant les ultraviolets et un agent absorbant les infrarouges ou un mélange de ceux-ci, et est dissous ou dispersé à un niveau optique dans la couche de résine,
ledit procédé étant **caractérisé par le fait que** :
une feuille de matière plastique est soumise à un processus de cintrage à l'avance en une forme sphérique ou une forme proche de celle-ci, ou une forme cylindrique,
puis la résine de renfort est moulée par injection sur la couche de résine disposée sur un côté de surface concave de la feuille de matière plastique ayant été soumise à un processus de cintrage.

2. Procédé selon la revendication 1, dans lequel l'agent absorbant les ondes électromagnétiques est un colorant photochrome.

3. Procédé selon l'une des revendications 1 ou 2, dans lequel la couche de résine est l'une parmi une résine de polyuréthane, une résine acrylique, une résine de polyester, une résine de polyamide et une résine époxy, ou un mélange de celles-ci.

4. Procédé selon la revendication 3, dans lequel la couche de résine est une couche de résine d'un polymère réticulé.

5. Procédé selon la revendication 3, dans lequel la couche de résine est une substance durcie par durcissement thermique d'une composition de polyuréthane.

6. Procédé selon la revendication 3, dans lequel la couche de résine est une substance durcie par durcissement thermique, par durcissement électromagnétique ou par durcissement par une combinaison de ceux-ci d'une composition acrylique.

7. Procédé selon la revendication 3, dans lequel la couche de résine est une substance durcie par durcissement thermique d'un polyester insaturé.

8. Procédé selon la revendication 3, dans lequel la couche de résine est une substance durcie par durcissement thermique, par durcissement par ultraviolets ou par durcissement par une combinaison de ceux-ci d'une composition époxy.

9. Procédé selon l'une quelconque des revendications 1, 2 et 5 à 8, dans lequel la couche de résine est un mélange d'un polymère à chaîne droite et d'un polymère réticulé.

10. Procédé selon la revendication 9, dans lequel la couche de résine est un mélange d'une résine de polyuréthane à chaîne droite et d'une résine acrylique réticulée.

11. Procédé selon la revendication 9, dans lequel la couche de résine est un mélange d'une résine acrylique à chaîne droite et d'une résine de polyuréthane réticulée.

12. Procédé selon l'une quelconque des revendications 1 à 11, dans lequel la feuille de matière plastique est une feuille stratifiée.

13. Procédé selon la revendication 12, dans lequel l'une quelconque ou plusieurs des couches dans la feuille stratifiée contient (contiennent) un agent absorbant les ondes électromagnétiques,
dans lequel l'agent absorbant les ondes électromagnétiques dans la feuille stratifiée est l'un quelconque parmi un agent absorbant la lumière visible, un agent absorbant les ultraviolets et un agent absorbant les infrarouges, ou un mélange de ceux-ci.

14. Procédé selon la revendication 13, dans lequel l'agent absorbant les ondes électromagnétiques est un colorant photochrome.

15. Procédé selon l'une quelconque des revendications 13 ou 14, dans lequel l'agent absorbant les ondes électromagnétiques est dissous ou dispersé à un niveau optique dans l'une quelconque ou plusieurs de la ou des couches dans la feuille stratifiée.

16. Procédé selon l'une quelconque des revendications 12 à 15, dans lequel la feuille stratifiée est une plaque polarisante.

17. Procédé selon l'une quelconque des revendications 1 à 16, dans lequel la lentille est un verre de prescription, des lunettes de soleil ou un verre de lunettes.
